# EUROPÄISCHE PATENTSCHRIFT

(11) **EP 3 245 421 B1**
(45) Veröffentlichungstag und Bekanntmachung des Hinweises auf die Patenterteilung: **08.04.2020**
(21) Anmeldenummer: 15813690.3
(22) Anmeldetag: 12.12.2015
(51) Int. Cl.: B60G 21/08, F16F 15/02

(54) **GYROSKOP BASIERTEN ROTATIONSDÄMPFER FÜR EIN KRAFTFAHRZEUG**
GYROSCOPE-BASED ROTATION DAMPER FOR A MOTOR VEHICLE
AMORTISSEUR DE ROTATION À BASE DE GYROSCOPE POUR UN VÉHICULE AUTOMOBILE

(30) Priorität: 17.01.2015 DE 102015000566
(43) Veröffentlichungstag der Anmeldung: 22.11.2017
(73) Patentinhaber: Audi AG, 85045 Ingolstadt (DE); Karlsruher Institut für Technologie, 76131 Karlsruhe (DE)
(72) Erfinder: SCHEURICH, Bastian, 74206 Bad Wimpfen (DE); KOCH, Tilo, 85055 Ingolstadt (DE); GAUTERIN, Frank, 76829 Leinsweiler (DE); FREY, Michael, 76275 Ettlingen (DE)
(86) Internationale Anmeldenummer: PCT/EP2015/002500
(87) Internationale Veröffentlichungsnummer: WO 2016/112942

(56) Entgegenhaltungen:
- EP-A1- 0 650 890
- DE-B3-102013 015 702

## Beschreibung

Die Erfindung betrifft einen Rotationsdämpfer für ein Kraftfahrzeug gemäß der im Oberbegriff des Patentanspruches 1 angegebenen Art.

Aus dem Stand der Technik sind verschiedene Konzepte von Rotationsdämpfern zur Aufbauschwingungsdämpfung eines Kraftfahrzeugs bekannt. So offenbart die DE 10 2011 101 350 A1 einen Rotationsdämpfer für ein Kraftfahrzeug, umfassend wenigstens ein Dämpferelement zum Dämpfen der Relativbewegung zwischen einer radaufhängungsseitig angeordneten ersten Masse und einer fahrzeugkarosserieseitig angeordneten zweiten Masse. Hierbei weist das Dämpferelement wenigstens ein drehbares Dämpferteil auf, welches über ein mit diesem mechanisch bewegungsgekoppeltes, durch die Massenbewegung bewegbares Hebelelement in eine Drehbewegung versetzbar ist, wobei in die mechanische Bewegungskopplung zwischen Hebelelement und drehbarem Dämpferteil wenigstens ein Federdämpfungselement integriert ist.

Ein gattungsgemäßer, sämtliche Merkmale des Oberbegriffs des Patentanspruches 1 aufweisender Rotationsdämpfer für ein Kraftfahrzeug ist in der DE 10 2013 015 702 B3 offenbart.

Der Erfindung liegt die Aufgabe zugrunde, einen Rotationsdämpfer für ein Kraftfahrzeug zur Verfügung zu stellen, bei dem der Dämpfungseffekt auf eine kardanisch am Kraftfahrzeugaufbau gelagerte, gyroskopisch wirkende Schwungmasse zurückzuführen ist.

Diese Aufgabe wird durch die Merkmale des Patentanspruches 1 gelöst.

Die Unteransprüche bilden vorteilhafte Weiterbildungen der Erfindung.

Der erfindungsgemäße Rotationsdämpfer für ein Kraftfahrzeug umfasst eine über einen Antrieb angetriebene, mit der Winkelgeschwindigkeit ω_{ϕ} um eine Drehachse rotierende Schwungmasse, die über ein erstes Lagerelement und ein zweites Lagerelement kardanisch am Kraftfahrzeugaufbau gelagert ist. Hierzu ist die Schwungmasse um den Drehwinkel ϕ drehbar am ersten Lagerelement gelagert und das erste Lagerelement ist um eine orthogonal zur Drehachse der Schwungmasse ausgerichtete erste Achse um einen ersten Drehwinkel θ drehbar am zweiten Lagerelement gelagert und das zweite Lagerelement ist um eine orthogonal zur ersten Achse ausgerichtete zweite Achse um einen zweiten Drehwinkel ψ drehbar am Kraftfahrzeugaufbau gelagert. Weiterhin weist das erste Lagerelement Mittel auf, über die das erste Lagerelement derart mit einem Radträger verbindbar ist, dass eine Ein-/Ausfederbewegung des Radträgers eine Drehung des ersten Lagerelements um den ersten Drehwinkel θ bewirkt. Zudem umfasst der Rotationsdämpfer einen Wellenantrieb, der über eine Antriebswelle mit dem zweiten Lagerelement in Wirkverbindung steht und eine Reglereinheit zur Regelung des Wellenantriebs, wobei die Reglereinheit über den Wellenantrieb die Winkelgeschwindigkeit ω_{ψ} und/oder das Drehmoment M_{ψ} der Antriebswelle in Abhängigkeit des ersten Drehwinkels θ und/oder des Drehmoments M_{θ} regelt.

Die erfindungsgemäße Ausgestaltung des Rotationsdämpfers zeichnet sich dadurch aus, dass der Effekt der Drehträgheit verwendet wird, um Kräfte ins Fahrwerk einzuleiten. Diese Kräfte können die Funktion eines herkömmlichen Dämpferelements ersetzen und erweitern.

Nachfolgend eine kurze Erläuterung des Funktionsprinzips:
Im Anfangszustand rotiert die Schwungmasse mit der Winkelgeschwindigkeit ω_{ϕ} um ihre Drehachse. Wenn an der ersten Achse des ersten Lagerelements ein Drehmoment M_{Θ} wirksam wird, entsteht aufgrund der Präzession ein Drehmoment M_{ψ} um die zweite Achse. Die Momente führen zu einer Winkelgeschwindigkeit des ersten bzw. zweiten Lagerelements. Ein Drehmoment M_{Θ} führt folglich zu einer Winkelgeschwindigkeit ω_{Θ} des ersten Lagerelements. Diese Verdrehung verändert die Richtung des Winkelgeschwindigkeitsvektors ω_{ϕ} der Schwungmasse. Auf eine solche Störung reagiert die rotierende Schwungmasse mit dem angesprochenen Präzessionsmoment M_{ψ}. Da aber die Winkelgeschwindigkeit ω_{ψ} konstruktionsbedingt ebenfalls den Winkelgeschwindigkeitsvektor ω_{ϕ} der Schwungmasse verändert, besteht ein direkter Einfluss aller drei Achsen. Das Einbringen von Energie in eine Achse zeigt eine Veränderung der Energie der beiden anderen Achsen.

Wird das erste Lagerelement als Eingang betrachtet, so sind M_{Θ} und ω_{Θ} gleichgerichtet. An der zweiten Achse des zweiten Lagerelements kann diese Energie wieder entnommen werden, dabei sind M_{ψ} und ω_{ψ} entgegengesetzt orientiert. Der umgekehrte Fall ist ebenso möglich. Gleichgerichtete Beträge von M_{ψ} und ω_{ψ} führen zu ungleich gerichteten Beträgen von M_{Θ} und ω_{Θ}. Wird nicht die gesamte Energie des Drehmoments M_{ψ} entnommen, so wird aufgrund des Rückkopplungseffekts die Winkelgeschwindigkeit ω_{ϕ} der Schwungmasse steigen. Die überschüssige Energie wird in Form kinetischer Energie in der Drehbewegung der Schwungmasse gespeichert. Das Übersetzungsverhältnis der einzelnen Momente wird dabei durch die Drehträgheiten der Schwungmasse bestimmt.

Ist nun das erste Lagerelement derart mit einem Radträger verbunden, so dass eine Ein-/Ausfederbewegung des Radträgers ein Drehmoment M_{Θ} und und eine Winkelgeschwindigkeit ω_{Θ} des ersten Lagerelement um die erste Achse bewirken, entsteht eine Relativbewegung des zweiten Lagerelements um die zweite Achse. Wird zur Winkelgeschwindigkeit ω_{ψ} des zweiten Lagerelements ein Gegenmoment M_{ψ} aufgebracht, so wird die Relativbewegung des zweiten Lagerelements um die zweite Achse gedämpft. Dies führt wiederum zum Dämpfen der Winkelgeschwindigkeit ω_{Θ} des ersten Lagerelements um die erste Achse. Je nach Größe des Betrages des Gegenmoments M_{ψ} fällt die Dämpfung stärker oder schwächer aus.

Wird im Gegensatz dazu ein der Winkelgeschwindigkeit ω_{ψ} gleichgerichtetes Moment M_{ψ} aufgebracht, führt dies zu einer Unterstützung der Ein-/Ausfederbewegung. D.h. der Rotationsdämpfer kann auch als Aktuator verwendet werden, um aktiv Vertikalkräften am Radträger zu stellen und somit Funktionen eines aktiven Fahrwerks zu übernehmen.

Vorzugsweise ist der Antrieb der Schwungmasse und/oder der Wellenantrieb der Antriebswelle als ein Elektromotor ausgebildet. Dies hat den Vorteil, dass im Generatorbetrieb die Möglichkeit der Energieerzeugung gegeben ist, so dass unter Umständen eine Zurückspeisung von Energie ins Bordnetz ermöglicht ist.

Gemäß einer weiteren vorteilhafter Ausführungsform der Erfindung steht das erste Lagerelement derart mit dem Radträger Wirkverbindung, dass bei einer Ein- /Ausfederbewegung des Radträgers für den ersten Drehwinkel θ die Bedingung -π|2 < θ < +π/2 stets erfüllt ist.

Hierdurch ist gewährleistet, dass ein Moment Me sehr lange aufrecht erhalten werden kann, so dass das System zur Wankstabilisierung, Heben und Senken von Rädern und des Aufbaus und weiteren denkbaren aktiven Fahrwerksregelungen verwendet werden kann.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

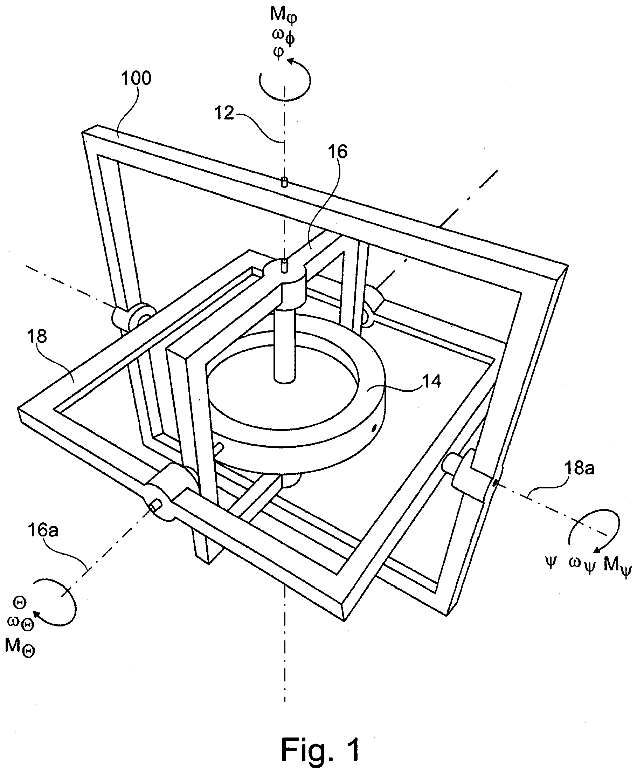

- Fig. 1: eine schematische Darstellung eines erfindungsgemäßen Rotationsdämpfers.

Fig. 1 zeigt einen insgesamt mit der Bezugsziffer 10 bezeichneten Rotationsdämpfer für ein Kraftfahrzeug in einer schematischen Darstellung.

Der Rotationsdämpfer 10 umfasst eine um eine Drehachse 12 mit der Winkelgeschwindigkeit ω_{ϕ} rotierende Schwungmasse 14, die über ein erstes Lagerelement 16 und ein zweites Lagerelement 18 kardanisch gelagert ist.

Hierbei ist die Schwungmasse 14 um den Drehwinkel ϕ drehbar am ersten Lagerelement 16 gelagert und das erste Lagerelement 16 ist um eine orthogonal zur Drehachse 12 der Schwungmasse 14 ausgerichteten ersten Achse 16a um einen ersten Drehwinkel θ drehbar am zweiten Lagerelement 18 gelagert und das zweite Lagerelement 18 ist um eine orthogonal zur ersten Achse 16a ausgerichteten zweiten Achse 18a um einen zweiten Drehwinkel ψ drehbar am Kraftfahrzeugaufbau 100 gelagert.

Nicht dargestellt in der schematischen Darstellung gemäß Fig. 1 ist ein Antrieb der Schwungmasse 14, ein mit dem zweiten Lagerelement 18 über eine Antriebswelle in Wirkverbindung stehender Wellenantrieb sowie die Anbindung des ersten Lagerelements 16 an einen Radträger. Auf eine Darstellung der Regelungseinrichtung, über den der Wellenantrieb und damit die Winkelgeschwindigkeit ω_{ψ} und/oder das Drehmoment M_{ψ} der Antriebswelle in Abhängigkeit des ersten Drehwinkels θ und/oder des ersten Drehmoments M_{θ} regelbar ist, wurde ebenfalls verzichtet.

Der schematisch dargestellte Rotationsdämpfer 10 verwendet den Effekt der Drehträgheit, um an geeigneter Stelle Kräfte in Fahrwerk einzuleiten. Diese Kräfte sollen die Funktion eines herkömmlichen Dämpferelements ersetzen und erweitern.

Nachfolgend eine kurze Erläuterung des Funktionsprinzips:
Im Anfangszustand rotiert die Schwungmasse 14 mit der Winkelgeschwindigkeit ω_{ϕ} um ihre Drehachse 12. Wenn an der ersten Achse 16a des ersten Lagerelements 16 ein Drehmoment M_{Θ} wirksam wird, entsteht aufgrund der Präzession ein Drehmoment M_{ψ} um die zweite Achse 18a. Die Momente führen zu einer Winkelgeschwindigkeit ω_{Θ} bzw. ω_{ψ} des ersten bzw. zweiten Lagerelements 16, 18. Ein Drehmoment M_{Θ} führt folglich zu einer Winkelgeschwindigkeit ω_{Θ} des ersten Lagerelements 16. Diese Verdrehung verändert die Richtung des Winkelgeschwindigkeitsvektors ω_{ϕ} der Schwungmasse 14. Auf eine solche Störung reagiert die rotierende Schwungmasse 14 mit dem angesprochenen Präzessionsmoment M_{ψ}. Da aber die Winkelgeschwindigkeit ω_{ψ} konstruktionsbedingt ebenfalls den Winkelgeschwindigkeitsvektor ω_{ϕ} der Schwungmasse 14 verändert, besteht ein direkter Einfluss aller drei Achsen. Das Einbringen von Energie in eine Achse zeigt eine Veränderung der Energie der beiden anderen Achsen.

Wird das erste Lagerelement 16 als Eingang betrachtet, so sind M_{Θ} und ω_{Θ} gleichgerichtet. An der zweiten Achse 18a des zweiten Lagerelements 18 kann diese Energie wieder entnommen werden, dabei sind M_{ψ} und ω_{ψ} entgegengesetzt orientiert. Der umgekehrte Fall ist ebenso möglich. Gleichgerichtete Beträge von M_{ψ} und ω_{ψ} führen zu ungleich gerichteten Beträgen von M_{Θ} und ω_{Θ}. Wird nicht die gesamte Energie des Drehmoments M_{ψ} entnommen, so wird aufgrund des Rückkopplungseffekts die Winkelgeschwindigkeit ω_{ϕ} der Schwungmasse 14 steigen. Die überschüssige Energie wird in Form kinetischer Energie in der Drehbewegung der Schwungmasse 14 gespeichert. Das Übersetzungsverhältnis der einzelnen Momente wird dabei durch die Drehträgheiten der Schwungmasse bestimmt.

Ist nun das erste Lagerelement 16 derart mit einem Radträger verbunden, so dass eine Ein-/Ausfederbewegung des Radträgers ein Drehmoment M_{Θ} und und eine Winkelgeschwindigkeit ω_{Θ} des ersten Lagerelement 16 um die erste Achse 16a bewirken, entsteht eine Relativbewegung des zweiten Lagerelements 18 um die zweite Achse 18a. Wird zur Winkelgeschwindigkeit ω_{ψ} des zweiten Lagerelements über den Wellenmotor ein Gegenmoment M_{ψ} aufgebracht, so wird die Relativbewegung des zweiten Lagerelements 18 um die zweite Achse 18a gedämpft. Dies führt wiederum zum Dämpfen der Winkelgeschwindigkeit ω_{Θ} des ersten Lagerelements 16 um die erste Achse 16a. Je nach Größe des Betrages des Gegenmoments M_{ψ} fällt die Dämpfung stärker oder schwächer aus.

Wird im Gegensatz dazu vom Wellenmotor ein der Winkelgeschwindigkeit ω_{ψ} gleichgerichtetes Moment M_{ψ} aufgebracht, führt dies zu einer Unterstützung der Ein-/Ausfederbewegung. D.h. der Rotationsdämpfer kann auch als Aktuator verwendet werden, um aktiv Vertikalkräften am Radträger zu stellen und somit Funktionen eines aktiven Fahrwerks zu übernehmen.

## Patentansprüche

1. Rotationsdämpfer für ein Kraftfahrzeug, umfassend
- eine über einen Antrieb angetriebene, mit einer Winkelgeschwindigkeit (ω_{ϕ}) um eine Drehachse (12) rotierende Schwungmasse (14), die über ein erstes Lagerelement (16) und ein zweites Lagerelement (18) kardanisch am Kraftfahrzeugaufbau (100) gelagert ist, wobei die Schwungmasse (14) um einen Drehwinkel (ϕ) drehbar am ersten Lagerelement (16) gelagert ist und das erste Lagerelement (16) um eine orthogonal zur Drehachse (12) der Schwungmasse (14) ausgerichtete erste Achse (16a) um einen ersten Drehwinkel (θ) drehbar am zweiten Lagerelement (18) gelagert ist und das zweite Lagerelement (18) um eine orthogonal zur ersten Achse (16a) ausgerichtete zweite Achse (18a) um einen zweiten Drehwinkel (ψ) drehbar am Kraftfahrzeugaufbau (100) gelagert ist, sowie
- eine Reglereinheit zur Regelung eines Wellenantriebs,
**dadurch gekennzeichnet, dass** das am Kraftfahrzeugaufbau (100) drehbar gelagerte zweite Lagerelement (18) über eine Antriebswelle mit dem Wellenantrieb in Wirkverbindung steht, wobei das am zweiten Lagerelement (18) drehbar gelagerte erste Lagerelement (16) mit einem Radträger derart in Wirkverbindung steht, dass eine Ein-/Ausfederbewegung des Radträgers eine Drehung des ersten Lagerelements (16) um den ersten Drehwinkel (θ) bewirkt, wobei die Reglereinheit über den Wellenantrieb die Winkelgeschwindigkeit (ω_{ψ}) und/oder das Drehmoment (M_{ψ}) der Antriebswelle in Abhängigkeit des ersten Drehwinkels (θ) und/oder des ersten Drehmoments (M_{θ}) regelt.

2. Rotationsdämpfer nach Anspruch 1, **dadurch gekennzeichnet, dass** der Antrieb der Schwungmasse (14) und/oder der Wellenantrieb der Antriebswelle als Elektromotor ausgebildet sind.

3. Rotationsdämpfer nach Anspruch 1 oder 2, **dadurch gekennzeichnet, dass** das erste Lagerelement (16) derart mit dem Radträger verbunden ist, dass bei einer Ein-/Ausfederbewegung des Radträgers für den ersten Drehwinkel (θ) stets gilt: -π/2 < θ < +π/2.

4. Rotationsdämpfer nach einem der Ansprüche 1 bis 3, **dadurch gekennzeichnet, dass** der Leistungsfluss an der Antriebswelle von dem Wellenmotor positiv oder negativ ist.

5. Rotationsdämpfer nach einem der Ansprüche 1 bis 4, **dadurch gekennzeichnet, dass** der Leistungsfluss an der Drehachse (12) von dem Antrieb positiv oder negativ ist.

6. Rotationsdämpfer nach einem der Ansprüche 1 bis 5, **dadurch gekennzeichnet, dass** der Leistungsfluss an der ersten Achse (16a) von der Anbindung des Radträgers positiv oder negativ ist.

## Claims

1. Rotary damper for a motor vehicle, comprising
- an oscillating mass (14), which is driven by a drive, rotating about a rotational axis (12) at an angular speed (wφ), which is supported cardanically on the motor vehicle body (100) via a first bearing element (16) and a second bearing element (18), wherein the oscillating mass (14) is supported on the first bearing element (16) so as to be rotatable by a rotational angle (φ) and the first bearing element (16) is supported on the second bearing element (18) so as to be rotatable by a first rotational angle (θ) about a first axis (16a), which is orthogonal to the rotational axis (12) of the oscillating mass (14) and the second bearing element (18) is supported on the motor vehicle body (100) so as to be rotatable by a second rotational angle (ψ) about a second axis (18a), which is orthogonal to the first axis (16a), as well as
- a control unit for controlling a shaft drive,
**characterised in that** the second bearing element (18), which is rotatably mounted on the motor vehicle body (100), is operatively connected to the shaft drive via a driveshaft, wherein the first bearing element (16), which is rotatably mounted on the second bearing element (18), is operatively connected to a hub carrier such that a compression/rebound movement of the hub carrier causes a rotation of the first bearing element (16) by the first rotational angle (θ), wherein the control unit controls the angular speed (ωΨ) and/or the torque (M_{ψ}) of the driveshaft via the shaft drive dependent on the first rotational angle (θ) and/or the first torque (Me).

2. Rotary damper according to claim 1, **characterised in that** the drive for the oscillating mass (14) and/or the shaft drive for the driveshaft are embodied as an electric motor.

3. Rotary damper according to claim 1 or 2, **characterised in that** the first bearing element (16) is connected to the hub carrier such that, with a compression/rebound movement of the wheel support, the equation -π/2 < θ < + π/2 always applies to the first rotational angle (θ).

4. Rotary damper according to any of claims 1 to 3, **characterised in that** the power flow at the driveshaft from the shaft motor is positive or negative.

5. Rotary damper according to any of claims 1 to 4, **characterised in that** the power flow at the rotational axis (12) from the drive is positive or negative.

6. Rotary damper according to any of claims 1 to 5, **characterised in that** the power flow at the first axis (16a) from the hub carrier connection is positive or negative.

## Revendications

1. Amortisseur rotatif pour un véhicule automobile, comprenant
- une masse d'inertie (14) entraînée par un entraînement, tournant à une vitesse angulaire (ω_{ϕ}) autour d'un axe de rotation (12) qui est logée par le biais d'un premier élément de palier (16) et d'un second élément de palier (18) par un cardan au niveau de la carrosserie de véhicule automobile (100), dans lequel la masse d'inertie (14) est logée de manière à pouvoir tourner autour d'un angle de rotation (ϕ) au niveau du premier élément de palier (16) et le premier élément de palier (16) est logé de manière à pouvoir tourner autour d'un premier axe (16a) orienté orthogonalement à l'axe de rotation (12) de la masse d'inertie (14) autour d'un premier angle de rotation (θ) au niveau du second élément de palier (18) et le second élément de palier (18) est logé de manière à pouvoir tourner autour d'un second axe (18a) orienté orthogonalement au premier axe (16a) autour d'un second angle de rotation (ψ) au niveau de la carrosserie de véhicule (100), ainsi que
- une unité de régulation pour la régulation d'un entraînement d'arbre,
**caractérisé en ce que** le second élément de palier (18) logé de manière à pouvoir tourner au niveau de la carrosserie de véhicule automobile (100) est en liaison active par le biais d'un arbre d'entraînement à l'entraînement d'arbre, dans lequel le premier élément de palier (16) logé de manière à pouvoir tourner au niveau du second élément de palier (18) est en liaison active avec un support de roue de telle manière qu'un mouvement de compression/débattement du support de roue provoque une rotation du premier élément de palier (16) autour du premier angle de rotation (θ), dans lequel l'unité de régulation régule par le biais de l'entraînement d'arbre la vitesse angulaire (ωψ) et/ou le couple (M_{ψ}) de l'arbre d'entraînement en fonction du premier angle de rotation (θ) et/ou du premier couple (Me).

2. Amortisseur rotatif selon la revendication 1, **caractérisé en ce que** l'entraînement de la masse d'inertie (14) et/ou l'entraînement d'arbre de l'arbre d'entraînement sont réalisés comme moteur électrique.

3. Amortisseur rotatif selon la revendication 1 ou 2, **caractérisé en ce que** le premier élément de palier (16) est relié au support de roue de telle manière que lors d'un mouvement de compression/débattement du support de roue pour le premier angle de rotation (θ) il s'applique toujours : -π/2 < θ < +π/2.

4. Amortisseur rotatif selon l'une des revendications 1 à 3, **caractérisé en ce que** le flux de puissance au niveau de l'arbre d'entraînement du moteur d'arbre est positif ou négatif.

5. Amortisseur rotatif selon l'une des revendications 1 à 4, **caractérisé en ce que** le flux de puissance au niveau de l'axe de rotation (12) de l'entraînement est positif ou négatif.

6. Amortisseur rotatif selon l'une des revendications 1 à 5, **caractérisé en ce que** le flux de puissance au niveau du premier axe (16a) de la liaison du support de roue est positif ou négatif.
